# EUROPÄISCHE PATENTSCHRIFT

(11) **EP 1 020 108 B1**
(45) Veröffentlichungstag und Bekanntmachung des Hinweises auf die Patenterteilung: **28.07.2004**
(21) Anmeldenummer: 99124528.3
(22) Anmeldetag: 09.12.1999
(51) Int. Cl.: A01F 7/06

(54) **Rotor für einen Axialmähdrescher**
Rotor for axial flow combine
Rotor pour moissonneuse-batteuse à écoulement axial

(30) Priorität: 14.01.1999 US 231919
(43) Veröffentlichungstag der Anmeldung: 19.07.2000
(73) Patentinhaber: DEERE & COMPANY, Moline, Illinois 61265-8098 (US)
(72) Erfinder: Pfeiffer, Dohn William, Davenport, IA 52807 (US); Andes, Raymond Manford, Bettendorf, IA 52722 (DE)
(74) Vertreter: Magin, Ludwig Bernhard

(56) Entgegenhaltungen:
- EP-A- 0 622 013
- GB-A- 2 015 855
- US-A- 4 248 248
- US-A- 5 145 462
- US-A- 5 387 153

## Beschreibung

Die Erfindung bezieht sich auf einen Rotor für einen landwirtschaftlichen Axialmähdrescher.

Landwirtschaftliche Mähdrescher sind große Maschinen, die landwirtschaftliches Gut ernten, dreschen, trennen und reinigen. Das dabei gewonnene saubere Getreide wird in einem am Mähdrescher befindlichen Korntank für sauberes Getreide gespeichert. Das saubere Korn kann dann vom Korntank durch einen Entladeförderer in einen Lastwagen, Anhänger oder ein anderes Aufnahmebehältnis verbracht werden.

Axialmähdrescher haben ein oder zwei große Rotore, die entlang der Längsachse der Maschine angeordnet sind, um das geerntete Gut zu dreschen und zu trennen. Diese Rotoren sind mit einem Beschickungsabschnitt zum Aufnehmen des geernteten Gutes, einem Dreschabschnitt zum Dreschen des vom Beschickungsabschnitt erhaltenen Erntegutes, sowie einem Trennabschnitt zum Befreien im gedroschenen Erntegutmaterial gefangenen Korns, das vom Dreschabschnitt erhalten wird, versehen.

Das Erntegut wird dem Beschickungsabschnitt von einem Schrägförderer zugeführt. Das Erntegut ist in Form einer Gutmatte angeordnet, die die Beschickungselemente des Rotors aufnehmen und in einen spiralwendelförmigen Fluß verbringen müssen. Bisher wurden derartige Beschickungselemente mit einem konstanten Neigungswinkel über die Länge des Elements angeordnet (US 4,148,323 A), oder diese Beschickungselemente sind am Punkt des ersten Kontakts mit der Matte des Ernteguts nach vorn geneigt, und gehen über die Länge des Elements in eine nach hinten geneigte Richtung über (US 4,178,943 A).

Diese grundlegenden Konzepte werden an allen gegenwärtig auf dem Markt befindlichen Axialmähdreschern verwendet. Ein diesen Maschinen gemeinsamer Nachteil ist, daß sie Schwierigkeiten haben, festes, feuchtes oder grünes Erntegut wie auch kurzes, trockenes oder glitschiges Erntegut mit derselben Beschickungsgeometrie zu verarbeiten. Diese Schwierigkeit begrenzt den Durchsatz der Maschine und veranlaßt den Bediener, den Betrag des Ernteguts, mit dem die Axialtrennvorrichtung beschickt wird, signifikant zu reduzieren.

US-A-5 145 462 offenbart einen Rotor gemäß der Oberbegriff des Anspruchs 1.

Das der Erfindung zugrunde liegende Problem wird darin gesehen, ein verbessertes Beschickungselement bereitzustellen, das im Beschickungsabschnitt eines Rotors eines Axialmähdreschers verwendet wird.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Das Beschickungselement nach der vorliegenden Erfindung ist ein wendelförmiges, an dem Beschickungsabschnitt der Rotortrommel befestigtes Element, das sich von letzterer (wenigstens im wesentlichen) radial nach außen erstreckt. Das Beschickungselement ist mit einem vorderen Abschnitt und in der Regel einem rückwärtigen Abschnitt versehen. Der vordere Bereich entspricht der Stelle, an der das Beschickungselement zuerst die Matte des Ernteguts berührt. Der vordere Abschnitt umfaßt einen radialen Bereich, der sich radial nach außen von der Rotortrommel fort erstreckt, und einen äußeren Bereich, der in der Drehrichtung des Rotors vorwärts gekehrt ist. Diese Vorwärtsneigung ist am anfänglichen Erfassungspunkt der Matte des Ernteguts am aggressivsten und wird dort weniger aggressiv, wo der vordere Abschnitt in seiner Längsrichtung stromabwärts den Übergangspunkt zwischen dem vorderen und dem rückwärtigen Abschnitt erreicht. In der Regel werden im Beschickungsabschnitt mehrere Beschickungselemente verwendet.

Der Rotor kann in an sich bekannter Weise mit einem Dreschabschnitt und/oder einem Trennabschnitt ausgestattet sein. Es wäre somit denkbar, ihn stromab einer konventionellen Dreschtrommel anzuordnen, so daß der Dreschabschnitt entfällt und der Trennabschnitt mit Erntegut aus dem Beschickungsabschnitt beaufschlagt wird.

Der rückwärtige Abschnitt des Beschickungselements, der dem Dreschabschnitt benachbart ist (bzw. dem Trennabschnitt, wenn eine dem Rotor vorgeschaltete Dreschtrommel verwendet wird) kann mit einem sich (wenigstens im wesentlichen) radial erstreckenden Bereich, der sich von der Rotortrommel radial nach außen erstreckt, und mit einem äußeren Bereich versehen sein, der entgegen der Drehrichtung des Rotors nach hinten gekehrt ist. Dadurch wird das Erntegut freigesetzt und nach außen, in Richtung auf das Gehäuse des Rotors geschleudert, und dabei gleichmäßig verteilt.

Vorzugsweise ist die Rotortrommel im Bereich des Beschickungsabschnitt konisch gestaltet, wobei die Spitze des Konus dem Schrägförderer zugewandt ist.

Die Befestigung des Beschickungselements am Rotor kann in lösbarer Weise, insbesondere durch Bolzen, d. h. Schrauben oder Nieten erfolgen. Dabei kann sich die Verwendung eines Befestigungszusammenbaus als vorteilhaft erweisen. Der Vorteil besteht in der unproblematischen Austauschbarkeit des Beschickungselements im Falle einer Beschädigung.

Schließlich können der vordere und der rückwärtige Abschnitt des Beschickungselements einteilig oder als separate, aneinander fixierte Elemente ausgeführt sein.

In den Zeichnungen ist ein nachfolgend näher beschriebenes Ausführungsbeispiel der Erfindung dargestellt. Es zeigt:
- Fig. 1: eine Seitenansicht eines landwirtschaftlichen Axialmähdreschers, und
- Fig. 2: eine Seitenansicht des Beschickungsabschnitts des Rotors.

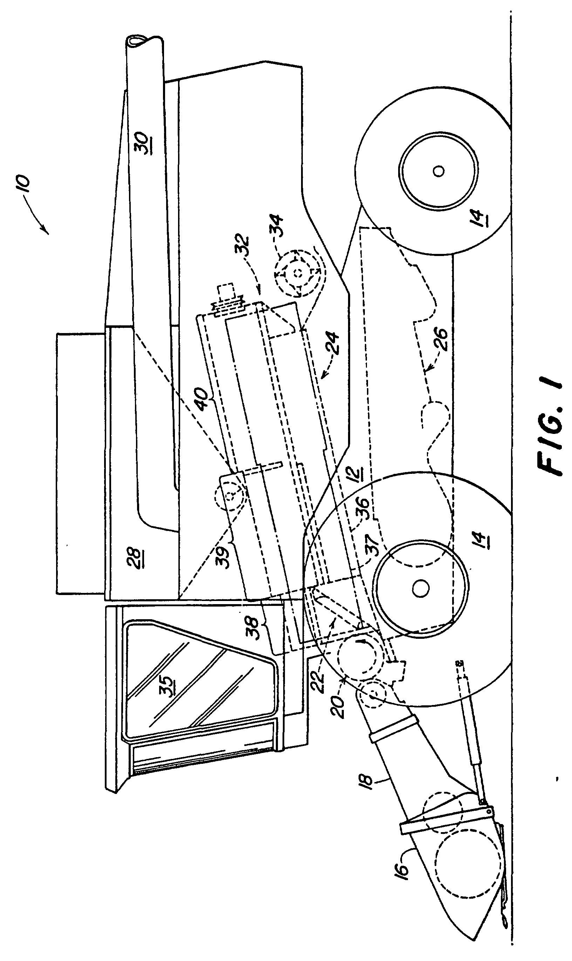

Figur 1 zeigt einen landwirtschaftlichen Mähdrescher 10 mit einem Chassis 12 und sich von diesem erstreckenden Bodenlaufrädern 14. Eine Erntegutbergungsvorrichtung 16 wird verwendet, Erntegut aufzunehmen und es einem Schrägförderer 18 zuzuführen. Das Erntegut wird vom Schrägförderer 18 einer Leittrommel 20 zugeführt. Die Leittrommel 20 leitet das Erntegut nach oben durch einen Einlaßübergangsbereich 22 an eine Axialtrennvorrichtung 24 weiter.

Die Axialtrennvorrichtung 24 drischt und trennt das geerntete Gut. Korn und Spreu fallen durch Roste am Boden der Axialtrennvorrichtung 24 in ein Reinigungssystem 26. Das Reinigungssytem 26 entfernt die Spreu und führt das saubere Korn einem (nicht gezeigten) Kornelevator zu. Der Kornelevator legt das saubere Korn in einem Korntank 28 ab. Das saubere Korn im Korntank 28 kann durch eine Entladeschnecke 30 in einen Anhänger oder Lastwagen entladen werden.

Gedroschenes, vom Korn befreites Stroh wird aus der Axialtrennvorrichtung 24 durch einen Auslaß 32 heraus zu einer Abgabetrommel 34 geführt. Die Abgabetrommel 34 wirft das Stroh am rückwärtigen Ende des Mähdreschers 10 aus. Die Bedienung des Mähdreschers 10 erfolgt von einer Fahrerkabine 35 aus.

Die Axialtrennvorrichtung 24 umfaßt ein zylindrisches Rotorgehäuse 36 und einen im Rotorgehäuse 36 angeordneten Rotor 37. Die in Vorwärtsfahrtrichtung vorderen Teile des Rotors 37 und des Rotorgehäuses 36 definieren den Beschickungsabschnitt 38 der Axialtrennvorrichtung 24. In Längsrichtung des Rotors 37 stromabwärts des Beschickungsabschnitts 38 befindet sich ein Dreschabschnitt 39 und ein Trennabschnitt 40. Der Rotor 37 ist im Beschickungsabschnitt 38 mit einer konischen Rotortrommel 41 mit spiralwendelförmigen Beschickungselementen 42 zum Erfassen von Erntegut, das von der Leittrommel 20 und dem Einlaßübergangsbereich 22 empfangen wird, ausgestattet. Unmittelbar stromabwärts des Beschickungsabschnitts 38 ist der Dreschabschnitt 39 der Axialtrennvorrichtung 24. Im Dreschabschnitt 39 umfaßt der Rotor 37 eine zylindrische Rotortrommel 49 mit einer Anzahl an Dreschelementen 50, um das Erntegut zu dreschen, das vom Beschickungsabschnitt 38 empfangen wird. Stromabwärts des Dreschabschnitts 39 ist der Trennabschnitt 40, in dem das im Erntegutmaterial enthaltene Korn freigesetzt wird und durch das Rost in das Reinigungssystem 26 fällt.

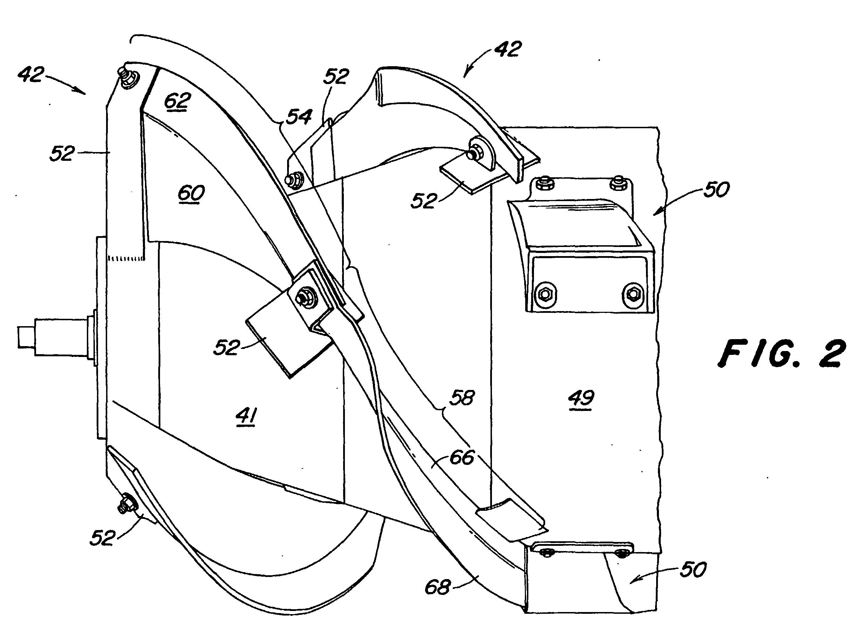

Die Beschickungselemente 42 sind in Figur 2 am besten dargestellt. Die Beschickungselemente 42 sind unter Verwendung von Bolzen (insbesondere Schrauben oder Nieten) durch Befestigungszusammenbauten 52 an der konischen Rotortrommel 41 befestigt. Die Beschickungselemente 42 sind mit einem vorderen Abschnitt 54 und einem rückwärtigen Abschnitt 58 ausgestattet. Der vordere Abschnitt 58 ist mit einem sich radial erstreckenden Bereich 60 und einem äußeren Bereich 62 ausgestattet, der in Drehrichtung nach vorn gekehrt, also relativ zum radial verlaufenden Bereich 60 in Drehrichtung abgewinkelt ist. In ähnlicher Weise ist der rückwärtige Abschnitt 58 mit einem sich radial nach außen erstreckenden Bereich 66 und einem äußeren, in rückwärtige Richtung gekehrten Bereich 68 ausgestattet. Letzterer ist relativ zum radial verlaufenden Bereich 66 entgegen der Drehrichtung abgewinkelt. Die Drehrichtung ist, wenn man in Figur 2 von links auf die Drehachse der Rotortrommel 41 blickt, im Gegenuhrzeigersinn.

Der äußere Bereich 62 des vorderen Abschnitts 54 erfaßt anfangs die Matte des Ernteguts auf eine sehr aggressive Weise, wobei in das Erntegut eingegriffen und es erfaßt wird, um es schnell in einen spiralförmigen Fluß übergehen zu lassen. Der nach vorn gekehrte Bereich 62 verjüngt sich ,in Längsrichtung stromabwärts sukzessive, bis der spiralförmige Fluß des Ernteguts völlig hergestellt ist. Dort, wo das Beschickungselement 42 sich in radialer Richtung nach innen wendet, geht der vordere Bereich 54 in den sich radial erstreckenden Bereich 60 über. Auf diese Weise ermöglicht der vordere Abschnitt 54, aggressiv in die Matte des Ernteguts einzugreifen, aber der Matte des Ernteguts nicht zu erlauben, zu tief in Richtung auf die Rotortrommel 41 vorzudringen, und Ungleichförmigkeiten zwischen den Beschickungselementen 42 anzusammeln.

Der äußere Bereich 68 des rückwärtigen Abschnitts 58 ist relativ zur Drehrichtung nach hinten gekehrt, um das Erntegut freizusetzen und es nach außen, in Richtung auf das Gehäuse 36 des Rotors 37 zu schleudern (wischen), und dabei das Erntegut gleichmäßig zwischen den Beschickungselementen 42 zu verteilen. Dadurch wird dem radial inneren Erntegut ermöglicht, den durch das Beschickungselement 42 erzeugten Fluß auf einer spiralförmigen Bahn fortzusetzen. Das Erntegut kann leicht über den nach hinten gekehrten äußeren Bereich 68 des rückwärtigen Abschnitts 58 nach außen übergehen, um eine gleichmäßige spiralförmige Verteilung des Erntegutflusses zwischen dem Beschickungselement 42 und dem Rotorgehäuse 36 bereitzustellen.

## Patentansprüche

1. Rotor (37) für einen landwirtschaftlichen Axialmähdrescher, der einen Beschickungsabschnitt (38) zum Erfassen von Erntegut und mindestens ein im Beschickungsabschnitt (38) befestigtes wendelförmiges Beschickungselement (42) mit einem vorderen Abschnitt (54) aufweist, wobei der vordere Abschnitt (54) Erntegut zuerst erfaßt und mit einem sich von einer Rotortrommel (41) des Rotors (37) wenigstens im wesentlichen radial nach außen erstrekkenden Bereich (60) und mit einem äußeren Bereich (62) versehen ist **dadurch gekennzeichnet, daß** der äußere Bereich (62) vorwärts, in die Richtung auf die Drehrichtung des Rotors (37) zu, geneigt ist.

2. Rotor (37) nach Anspruch 1, mit einem Dreschabschnitt (39) und/oder einem Trennabschnitt (40).

3. Rotor (37) nach Anspruch 1 oder 2, wobei das Beschickungselement (42) einen rückwärtigen Abschnitt (58) aufweist, der dem Dreschabschnitt (39) oder dem Trennabschnitt (40) benachbart ist.

4. Rotor nach Anspruch 3, wobei der rückwärtige Abschnitt (58) mit einem sich radial erstreckenden Bereich (66), der sich von der Rotortrommel (41) des Rotors (37) wenigstens im wesentlichen radial nach außen erstreckt, und einem äußeren Bereich (68), der gegenüber der Drehrichtung des Rotors (37) nach hinten geneigt ist, versehen ist.

5. Rotor (37) nach einem der Ansprüche 1 bis 4, wobei die Rotortrommel (41) im Beschickungsabschnitt (38) konisch ist.

6. Rotor (37) nach einem der Ansprüche 1 bis 5, wobei das Beschickungselement (42) an der Rotortrommel (41) lösbar befestigt ist.

7. Rotor (37) nach Anspruch 6, wobei das Beschickungselement (38) an der Rotortrommel (41) durch einen Befestigungszusammenbau (52) befestigt ist.

8. Rotor (37) nach einem der Ansprüche 1 bis 7, wobei mehrere Beschickungselemente (42) vorhanden sind.

9. Rotor (37) nach einem der Ansprüche 3 bis 8, wobei der vordere Abschnitt (54) und der rückwärtige Abschnitt (58) des Beschickungselements (42) einteilig oder als separate, aneinander fixierte Elemente ausgeführt sind.

10. Mähdrescher (10) mit einem Rotor (37) nach einem der vorhergehenden Ansprüche.

## Claims

1. A rotor (37) for an agricultural axial combine harvester, which comprises a feed section (38) for collecting harvested crop and at least one helically shaped feed element (42) fixed in the feed section (38), with a front section (54), wherein the front section (54) initially collects harvested crop and is provided with a region (60) extending at least substantially radially outwards from a rotor drum (41) of the rotor (37) and with an outer region (62), **characterized in that** the outer region (62) is inclined forwards, in the direction of the direction of rotation of the rotor (37).

2. A rotor (37) according to claim 1, with a threshing section (38) and/or a separating section (40).

3. A rotor (37) according to claim 1 or 2, wherein the feed element (42) has a rearward section (58) which is adjacent the threshing section (39) or the separating section (40).

4. A rotor according to claim 3, wherein the rearward section (58) is provided with a radially extending region (66) which extends at least substantially radially outwards from the rotor drum (41) of the rotor (37), and an outer region (68) which is inclined to the rear in relation to the direction of rotation of the rotor (37).

5. A rotor (37) according to any of claims 1 to 4, wherein the rotor drum (41) is conical in the feed section (38).

6. A rotor (37) according to any of claims 1 to 5, wherein the feed element (42) is removably fixed on the rotor drum (41).

7. A rotor (37) according to claim 6, wherein the feed element (38) is fixed on the rotor drum (41) by a fixing assembly (52).

8. A rotor (37) according to any of claims 1 to 7, wherein there is a plurality of feed elements (42).

9. A rotor (37) according to any of claims 3 to 8, wherein the front section (54) and the rearward section (58) of the feed element (42) are implemented in one piece or as separate elements fixed to one another.

10. A combine harvester (10) with a rotor (37) according to any of the preceding claims.

## Revendications

1. Rotor (37) pour une moissonneuse-batteuse agricole axiale du type comportant une section d'approvisionnement (38) destinée à recevoir le produit moissonné et au moins un élément d'approvisionnement (42) de forme hélicoïdale fixé dans la section d'approvisionnement (38), et comportant une section frontale (54), la section frontale (54) saisissant en premier lieu le produit moissonné, comportant une zone (60) s'étendant au moins pratiquement radialement vers l'extérieur à partir d'un tambour (41) du rotor (37) et une zone extérieure (62), **caractérisé en ce que** la zone extérieure (62) est inclinée vers l'avant dans la direction de rotation du rotor.

2. Rotor (37) selon la revendication 1, **caractérisé en ce qu'**il comporte une section de battage (39) et/ou une section de séparation (40).

3. Rotor (37) selon la revendication 1 ou 2, dans lequel l'élément d'approvisionnement (42) présente une section postérieure (58) qui est située au voisinage de la section de battage (39) ou de la section de séparation (40).

4. Rotor selon la revendication 3, dans lequel la section postérieure (58) comporter une zone s'étendant radialement (66) qui s'étend au moins pratiquement radialement vers l'extérieur à partir du tambour (41) du rotor (37) et dans lequel une zone extérieure (68) est inclinée vers l'arrière par rapport à la direction de rotation du rotor (37).

5. Rotor (37) selon l'une des revendications 1 à 4, dans lequel le tambour de rotor (41) est conique dans la section d'approvisionnement (38).

6. Rotor (37) selon l'une quelconque des revendication 1 à 5, dans lequel l'élément d'approvisionnement (42) est fixé de manière détachable au tambour de rotor (41).

7. Rotor (37) selon la revendication 6, dans lequel l'élément d'approvisionnement (42) est fixé au tambour (41) par une structure d'assemblage et de fixation.

8. Rotor (37) selon l'une quelconque des revendications 1 à 7, dans lequel sont prévus plusieurs éléments d'approvisionnement (42).

9. Rotor (37) selon l'une quelconque des revendications 3 à 8, dans lequel la section frontale (54) et la section postérieure (58) de l'élément d'approvisionnement (42) sont en une seule pièce ou sous forme d'éléments individuels fixés les uns aux autres.

10. Moissonneuse-batteuse (10) comportant un rotor (37) selon l'une quelconque des revendications précédentes.
